(19)

Europäisches
Patentamt
European
Patent Office
Office européen
des brevets

(11) **EP 2 700 668 A1**

(12) **EUROPEAN PATENT APPLICATION**
published in accordance with Art. 153(4) EPC

(43) Date of publication:
26.02.2014 Bulletin 2014/09

(21) Application number: **12774326.8**

(22) Date of filing: **23.04.2012**

(51) Int Cl.:
*C08J 7/12* (2006.01)  *C08J 3/28* (2006.01)
*C08J 5/18* (2006.01)

(86) International application number:
**PCT/JP2012/060849**

(87) International publication number:
**WO 2012/144644 (26.10.2012 Gazette 2012/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2011  JP 2011095174**

(71) Applicant: **Daicel Corporation
Osaka 530-0001 (JP)**

(72) Inventors:
• **UMEMOTO Koichi
Amagasaki-shi
Hyogo 661-0964 (JP)**
• **ICHIKAWA Haruo
Himeji-shi
Hyogo 671-1283 (JP)**

(74) Representative: **Grünecker, Kinkeldey,
Stockmair & Schwanhäusser
Leopoldstrasse 4
80802 München (DE)**

(54) **CROSSLINKED PRODUCT OF CYCLIC OLEFIN RESIN, AND PROCESS FOR PRODUCING SAME**

(57)    A chain olefin-cyclic olefin copolymer is irradiated with an electron beam for crosslinking to prepare a crosslinkedproduct of a cyclic olefinic polymer. The cyclic olefin contains a bicyclic olefin. The proportion of the cyclic olefin in the total amount of the chain olefin and the cyclic olefin is more than 15% by mol and not more than 40% by mol. The chain olefin-cyclic olefin copolymer has a glass transition temperature of 20 to 80°C or has a degree of crystallinity of not more than 1%. The crosslinked product may have a haze of not more than 2%. The crosslinked product of the present invention has a low haze and a high transparency and combines heat resistance and flexibility.

EP 2 700 668 A1

**Description**

TECHNICAL FIELD

The present invention relates to a crosslinked product of a cyclic olefinic polymer and a process for producing the crosslinked product; the crosslinked product possesses transparency, heat resistance and flexibility and is available in various fields such as electrical or electronic apparatus or optical apparatus.

BACKGROUND ART

A cyclic olefinic polymer possesses excellent transparency, chemical resistance, dampproofness, mechanical and other characteristics, and is used in a variety of fields, including an optical component (such as a lens or an optical-recording material), an electrical or electronic component (such as a printed wiring board or a connector), an article for pharmaceutical or medical apparatus (such as a chemical container or a syringe), a laboratory tool (such as a beaker or an optical cell), and an automotive component. Meanwhile, the cyclic olefinic polymer also has characteristics including a low flexibility, an insufficient formability, and a low softening temperature while a high glass transition temperature; along with an expanding field of the applications, various improvements of the cyclic olefinic polymer are being examined depending on applications.

For example, as a polymer composition in tight contact to a metal layer of a printed-circuit board, Japanese Patent Application Laid-Open Publication No. 2005-47991 (JP-2005-47991A, Patent Document 1) discloses a crosslinking polymer composition in which 0.3 to 2.5 parts by weight of an organic peroxide, 7 to 30 parts by weight of a crosslinking auxiliary, and 5 to 100 parts by weight of an inorganic filler are dispersed in 100 parts by weight of a cyclic olefinic polymer. According to this document, the crosslinking polymer composition is heat-treated to give a crosslinked molded product having a great coating adherence and a high resistance to soldering heat.

Moreover, as an optical material (such as an optical lens or an optical film) or a medical material, Japanese Patent Application Laid-Open Publication No. 2006-274164 (JP-2006-274164A, Patent Document 2) discloses a process for irradiating a molded product comprising a cyclic olefinic polymer with a radioactive ray at an acceleration voltage of not less than 50 kV, an exposure dose of 50 to 1000 kGy, and a surface temperature of an irradiated area of (Tg-50)°C to (Tg+70)°C. This document discloses that irradiation of the cyclic olefinic polymer with a radioactive ray expands the molecular weight distribution of the cyclic olefinic polymer to improve the formability of the cyclic olefinic polymer. Moreover, the document states that the cyclic olefinic polymer contains not less than 10% by mol of a cyclic olefin unit and preferably has a glass transition temperature of not lower than 100°C. In Examples of this document, a cyclic olefinic polymer having a glass transition temperature of 58 to 140°C is irradiated with a β-ray at a surface temperature of an irradiated area of 75 to 180°C to produce a molded product without deformation. This document is silent on crosslinking.

These molded products, however, have a low flexibility, and are unavailable to application that requires flexibility. Further, although a radioactive ray (such as a β-ray) is applied under a high temperature in this process, an ordinary radioactive-ray irradiation apparatus is not equipped with a heating unit. Thus, this process has a low productivity. In particular, it is difficult to produce a crosslinked product having a high level of crosslinking density and high heat resistance or durability. Moreover, in Example 2 of Patent Document 2, a cyclic olefinic polymer (APEL8008T), which is formed from a tetracyclic olefin and has a glass transition temperature of 58°C, is irradiated with a β-ray to produce a sheet. This sheet also fails to possess transparency, heat resistance and reasonable (or proper) flexibility. In particular, since a sealant (or an encapsulant) for an optical device (particularly, e.g., an electronic apparatus) that requires transparency is difficult to heat at a high temperature from the point of view of protecting the optical device, the sealant is required to have a reasonable flexibility (low-temperature melting or softening) so that the sealant may be softened at about 30 to 80°C. This sheet, however, does not meet such flexibility. Moreover, due to a bulky structure of the tetracyclic olefin, it is necessary to increase an ethylene content of the polymer when a reasonable flexibility at a low temperature (low-temperature melting or softening) is required. A polymer having a high ethylene content inevitably shows crystallinity in an ethylene chain thereof and an increase in haze, so that the polymer is unsuitable for optical applications. In order to reduce the haze, a polymer having a high glass transition temperature is required. The polymer, however, lacks a reasonable flexibility at a low temperature (low-temperature melting or softening). Further, since decrease in glass transition temperature inevitably decreases heat resistance, there is a trade-off relationship between the flexibility and the heat resistance. Thus, incompatibility of the both characteristics was a skilled person's technical common knowledge.

Moreover, Japanese Patent Application Laid-Open Publication No. 11-340590 (JP-11-340590A, Patent Document 3) discloses a laminated plate for a printed-circuit board; the laminated plate comprises a sheet and an electroconductive metal foil laminated on the sheet and has a radiation crosslinking structure; the sheet is formed from a polymer composition containing 100 parts by weight of a thermoplastic norbornene polymer, 5 to 400 parts by weight of a polymer having an excellent radiation crosslinking to the norbornene polymer, and 0. 1 to 20 parts by weight of a radiation crosslinking auxiliary. According to this document, crosslinking of the thermoplastic norbornene polymer and a radiation-crosslinking (or radiation-crosslinkable) polymer (such as a polybutadiene) imparts high resistance to soldering heat to the sheet and achieves tight integration of the sheet and the metal foil.

In the polymer composition, however, the norbornene polymer decreases in characteristics due to the radiation-crosslinking polymer as an essential component. Further, the composition is deformed by irradiation of a radioactive ray.

Meanwhile, as a material usable in a variety of fields such as a film, a sheet, a container, a packaging material, an automotive component, an electric or electronic component, a building material, and a civil engineering material, Japanese Patent No. 3274702 (JP-3274702B, Patent Document 4) reports a multilayered material which comprises a layer containing a cyclic olefinic copolymer having a glass transition temperature of not higher than 30°C and a layer or formed product composed of at least one material selected from the group consisting of a synthetic polymer, a natural polymer, a metal, a metal oxide, and a mixture thereof. In Examples of this document, a cyclic olefin copolymer film having a degree of crystallinity of 1%, a glass transition temperature of 2°C or 3°C, and a melting point of 81°C or 73°C is heat-laminated to a LLDPE sheet, a nylon 6 sheet, a polyimide sheet, or an aluminum plate.

The cyclic olefinic copolymer having a low glass transition temperature has insufficient heat resistance. For example, a film-formed final product is liable to be deformed when the product is exposed to a high temperature in use.

Further, Japanese Patent Application Laid-Open Publication No. 6-345885 (JP-6-345885A, Patent Document 5) discloses a crosslinked product of a cyclic olefinic polymer; the crosslinked product is obtained by treating one or more cyclic olefinic polymer(s) with an electron beam or a radioactive ray; the cyclic olefinic polymer (s) has a glass transition temperature (Tg) of not lower than 50°C and is selected from the group consisting of a copolymer [a] of an $\alpha$-olefin and a cyclic olefin by addition polymerization, a polymer [b] of a cyclic olefin by ring-opening polymerization, a copolymer [c] of a cyclic olefin by ring-opening polymerization, and hydrogenated products [a'], [b'] and [c'] thereof. This document reports that the ratio (% by mol) of the $\alpha$-olefin and the cyclic olefin is 80: 20 to 99.9:0.1. Moreover, the document discloses that the glass transition temperature is preferably -30 to 45°C (in particular, -30 to 40°C) and the degree of crystallinity is preferably 0 to 40% (in particular, 0 to 25%). Furthermore, in Examples of this document, an ethylene-norbornene copolymer having a norbornene content of 10.1% by mol, a glass transition temperature of 4°C and a degree of crystallinity of 2.0% or an ethylene-norbornene copolymer having a norbornene content of 5.6% by mol, a glass transition temperature of 1°C and a degree of crystallinity of 4.3% is irradiated with a $\gamma$-ray to form a sheet.

This sheet, however, expresses crystallinity due to a high ethylene-chain content of the copolymer and has a low transparency. For that reason, the sheet is intended for use in the fields of medical treatment (such as an infusion solution bag), packaging, and food. In particular, the sheet lacks transparency required in the optical device or other fields. Further, while the sheet is designed for impartment of sufficient elasticity and flexibility for the former fields, the sheet has an excessively high elasticity and lacks a reasonable flexibility for the latter fields.

RELATED ART DOCUMENTS

PATENT DOCUMENTS

Patent Document 1: JP-2005-47991A (Claim 1, Paragraphs [0066][0106])
Patent Document 2: JP-2006-274164A (Claim 1, Paragraphs [0009][0022][0034], Examples)
Patent Document 3: JP-11-340590A (Claim 1, Paragraph [0041])
Patent Document 4: JP-3274702B (Claims, Paragraph [0019], Examples)
Patent Document 5: JP-6-345885A (Claims, Paragraphs [0001][0005][0066][0069][0086], Examples)

SUMMARY OF THE INVENTION

PROBLEMS TO BE SOLVED BY THE INVENTION

It is an object of the present invention to provide a crosslinked product of a cyclic olefinic polymer, having a low haze and a high transparency and having both heat resistance and flexibility (in particular, low-temperature softening); and a process for producing the same.

Another object of the present invention is to provide a crosslinked product of a cyclic olefinic polymer, having a high transparency and an excellent durability (stability) [e.g., water resistance, weather resistance (in particular, light resistance), and chemical resistance]; and a process for producing the same.

It is still another object of the present invention to provide a crosslinked product of a cyclic olefinic polymer, having an excellent dampproofness or an excellent mechanical characteristic; and a process for producing the same.

It is a further object of the present invention to provide a process for simply (or easily) producing a crosslinked product of a cyclic olefinic polymer, having excellent transparency, heat resistance, and flexibility (in particular, low-temperature softening).

## MEANS TO SOLVE THE PROBLEMS

The inventors of the present invention made intensive studies to achieve the above objects and finally found that a specific chain olefin-cyclic olefin copolymer is crosslinked using electron beam irradiation or other means to give a product having a low haze and a high transparency and having both heat resistance and flexibility. The present invention was accomplished based on the above findings.

That is, the crosslinked product of the present invention includes a crosslinked product of a chain olefin-cyclic olefin copolymer (a crosslinked product of a copolymer of a chain olefin and a cyclic olefin) comprising a chain olefin and a cyclic olefin as polymerizable components; the cyclic olefin contains a bicyclic olefin, the proportion of the cyclic olefin in the total amount of the chain olefin and the cyclic olefin is more than 15% by mol and not more than 40% by mol, and the chain olefin-cyclic olefin copolymer has a glass transition temperature of 20 to 80°C.

The present invention also includes a crosslinked product of a chain olefin-cyclic olefin copolymer comprising a chain olefin and a cyclic olefin as polymerizable components; the cyclic olefin contains a bicyclic olefin, the proportion of the cyclic olefin in the total amount of the chain olefin and the cyclic olefin is more than 15% by mol and not more than 40% by mol, and the chain olefin-cyclic olefin copolymer has a degree of crystallinity of not more than 1%.

In each one of these crosslinked products of the present invention, the chain olefin-cyclic olefin copolymer may have a degree of crystallinity of not more than 0.5%. The crosslinked product of the present invention may have a haze of not more than 2% (in particular, 0.1 to 1.5%) in accordance with JIS (Japanese Industrial Standards) K7136. The chain olefin-cyclic olefin copolymer may have a glass transition temperature of about 30 to 50°C. In the crosslinked product of the present invention, the cyclic olefin may comprise a norbornene compound, and the molar ratio of the chain olefin relative to the cyclic olefin may be about 84/16 to 75/25 in a ratio of the chain olefin/the cyclic olefin. Moreover, the crosslinked product of the present invention may have a breaking elongation of not less than 10% (in particular, 100 to 400%) in a thickness of 100 $\mu$m in accordance with JIS K7127. Further, the crosslinked product may have a gel fraction of not less than 5% by weight (in particular, not less than 70% by weight) measured by reflux with toluene for 3 hours. The crosslinked product of the present invention may have a storage modulus of 100 to 4000 MPa at a temperature of 25°C, a storage modulus of 0.01 to 10 MPa at a temperature of 80°C, and a molecular weight between crosslinking points of 8000 to 30000. The crosslinked product of the present invention may be substantially free from both a polymer having a crosslinking group and a crosslinking agent. The crosslinked product of the present invention may be an electron-beam-crosslinked product. The crosslinked product of the present invention may be a sealant (or an encapsulant), in the form of a sheet, for an optical device.

The present invention also includes a process for producing the crosslinked product, which comprises irradiating a chain olefin-cyclic olefin copolymer (a copolymer of a chain olefin and a cyclic olefin) with an electron beam or a radioactive ray. In this process, the copolymer may be irradiated with an electron beam without heating for crosslinking the polymer, particularly, the copolymer may be irradiated with an electron beam at an acceleration voltage of not less than 150 kV and an exposure dose of not less than 200 kGy for crosslinking the polymer.

Throughout this description, the term "flexibility" or "reasonable flexibility" not means softness or elasticity so that a rubber or an elastomer can be elongated or deformed around an ordinary temperature or a room temperature but means a property of softening at a relatively low temperature (for example, about 30 to 80°C, preferably about 40 to 70°C, and more preferably about 45 to 60°C) while showing a hardness (inelasticity) around an ordinary temperature or a room temperature. Specifically, the term "low-temperature softening" means a property of softening at a temperature of about 30 to 80°C and showing that an elastic modulus after softening is one hundredth or less as large as that before softening.

## EFFECTS OF THE INVENTION

According to the present invention, since a specific chain olefin-cyclic olefin copolymer is crosslinked using electron beam irradiation or others, the resulting crosslinked product has a low haze and a high transparency and has both heat resistance and flexibility (in particular, low-temperature softening). Further, the crosslinked product of the copolymer has a high transparency, an excellent durability [including water resistance, weather resistance (in particular, light resistance) and chemical resistance], and in addition, an excellent dampproofness or an excellent mechanical characteristic. Furthermore, the present invention allows a simple production of a crosslinked product, having excellent transparency, heat resistance and flexibility, of a cyclic olefinic polymer.

## DESCRIPTION OF EMBODIMENTS

The crosslinked product of the present invention is a crosslinked product of a cyclic olefinic polymer (a chain olefin-cyclic olefin copolymer) comprising a chain olefin and a cyclic olefin as polymerizable components.

(Cyclic olefinic polymer)

The cyclic olefinic polymer (uncrosslinked cyclic olefinic polymer) in the present invention contains a chain olefin and a cyclic olefin as polymerizable components.

The chain olefin may include, for example, a chain $C_{2-10}$ olefin such as ethylene, propylene, 1-butene, isobutene, 1-pentene, 3-methyl-1-pentene, 4-methyl-1-pentene, 1-hexene, or 1-octene. These chain olefins may be used alone or in combination. Among these chain olefins, an α-chain $C_{2-8}$ olefin is preferred, and an α-chain $C_{2-4}$ olefin (particularly, ethylene) is more preferred.

The cyclic olefin is a polymerizable cyclic olefin having an ethylenic double bond in a ring thereof, and contains a bicyclic olefin. Representative examples of the bicyclic olefin may include a norbornene (2-norbornene) which may have a substituent and an octalin (octahydronaphthalene) which may have a substituent. As the substituent, there may be mentioned an alkyl group, an alkenyl group, an aryl group, a hydroxyl group, an alkoxy group, a carboxyl group, an alkoxycarbonyl group, an acyl group, a cyano group, an amide group, a halogen atom, and others. These substituents may be used alone or in combination.

Specifically, the bicyclic olefin may include, for example, 2-norbornene; a norbornene compound having an alkyl group (a $C_{1-4}$ alkyl group), such as 5-methyl-2-norbornene, 5,5-dimethyl-2-norbornene, 5-ethyl-2-norbornene, or 5-butyl-2-norbornene; a norbornene compound having an alkenyl group, such as 5-ethylidene-2-norbornene; a norbornene compound having an alkoxycarbonyl group, such as 5-methoxycarbonyl-2-norbornene or 5-methyl-5-methoxycarbonyl-2-norbornene; a norbornene compound having cyano group, such as 5-cyano-2-norbornene; a norbornene compound having an aryl group, such as 5-phenyl-2-norbornene or 5-phenyl-5-methyl-2-norbornene; octalin; an octalin having an alkyl group, such as 6-ethyl-octahydronaphthalene.

These bicyclic olefins may be used alone or in combination. Among these bicyclic olefins, a norbornene compound, such as norbornene or a norbornene compound having an alkyl group (a $C_{1-4}$ alkyl group such as methyl group or ethyl group), is preferred.

The cyclic olefin contains at least a bicyclic olefin. The cyclic olefin may further contain a monocyclic olefin and/or a polycyclic (tri- or more-cyclic) olefin. The monocyclic olefin may include, for example, a cyclic $C_{4-12}$ cycloolefin such as cyclobutene, cyclopentene, cycloheptene, or cyclooctene. The polycyclic olefin may include, for example, dicyclopentadiene; a derivative such as 2,3-dihydrodicyclopentadiene, methanooctahydrofluorene, dimethanooctahydronaphthalene, dimethanocyclopentadienonaphthalene, or methanooctahydrocyclopentadienonaphthalene; a derivative having a substituent, such as 6-ethyl-octahydronaphthalene; and an adduct of cyclopentadiene and tetrahydroindene, a trimer to tetramer of cyclopentadiene.

According to the present invention, the cyclic olefin contains a bicyclic olefin. Probably because the bicyclic olefin (in particular, the above-mentioned norbornene compound such as norbornene) has a structure with an appropriate bulkiness, the crosslinking of the cyclic olefin and the chain olefin in a specific ratio achieves a novel polymer having a characteristic that has never been obtained in previous polymers (specifically, a characteristic having all of low-temperature softening, heat resistance and transparency). The proportion of the bicyclic olefin (particularly, the norbornene compound) the in the total cyclic olefin may be not less than 10% by mol, and may be, for example, not less than 30% by mol, preferably not less than 50% by mol, and more preferably not less than 80% by mol (particularly, not less than 90% by mol). The cyclic olefin may comprise the bicyclic olefin alone (100% by mol). When the proportion of the bicyclic olefin is too small and that of the polycyclic (tri- or more-cyclic) olefin (particularly, tetra- or more-cyclic olefin) is too large, the cyclic olefinic polymer is hard and cannot combine low-temperature softening and heat resistance. Moreover, when the proportion of the bicyclic olefin is too small and that of the monocyclic olefin is too large, the cyclic olefinic polymer cannot combine low-temperature softening and heat resistance.

In order to combine transparency and flexibility, with respect to the ratio (molar ratio) of the chain olefin (particularly, an α-chain $C_{2-4}$ olefin such as ethylene) and the cyclic olefin (particularly, a polycyclic olefin such as norbornene) in the chain olefin-cyclic olefin copolymer, the proportion of the cyclic olefin in the total amount of the chain olefin and the cyclic olefin is more than 15% by mol and not more than 40% by mol. According to the present invention, the above-mentioned proportion range of the cyclic olefin achieves well-balanced flexibility and heat resistance, prevents the development of haze (in particular, internal haze), and improves transparency.

Further, the ratio (molar ratio) of the chain olef in relative to the cyclic olefin is, for example, about 84/16 to 65/35 (e.g., about 84/16 to 75/25), preferably about 83/17 to 70/30, and more preferably about 81/19 to 73/27 (particularly, about 80/20 to 75/25) in a ratio of the chain olefin/the cyclic olefin. When transparency or heat resistance is important, the ratio (the chain olefin/the cyclic olefin) may be, for example, about 80/20 to 62/38, preferably about 79/21 to 65/35, and more preferably about 78/22 to 65/35 (particularly, about 75/25 to 67/33). In particular, in terms of combination of transparency, heat resistance, and low-temperature softening, the ratio (the chain olefin/the cyclic olefin) maybe about 84/16 to 75/25, preferably about 82/18 to 77/23, and more preferably about 82/18 to 78/22 (particularly, about 81/19 to 79/21). When the ratio of the cyclic olefin is too small, the chain olefin-cyclic olefin copolymer develops haze; when the ratio is too large, the copolymer has a low flexibility.

A copolymerizable monomer other than the olefinic monomer may include, for example, a vinyl ester monomer (such as vinyl acetate or vinyl propionate) ; a diene monomer (such as butadiene or isoprene); and a (meth)acrylic monomer [e.g., (meth) acrylic acid or a derivative thereof (such as (meth)acrylate)]. These other copolymerizable monomers may be used alone or in combination. The proportion of these other copolymerizable monomers is, for example, not more than 5% by mol and preferably not more than 1% by mol in the copolymer.

The chain olefin-cyclic olefin copolymer may be a polymer obtainable by addition polymerization or may be a polymer obtainable by ring-opening polymerization (e.g., ring-opening metathesis polymerization). Moreover, the polymer obtainable by ring-opening metathesis polymerization may be a hydrogenated polymer. The chain olefin-cyclic olefin copolymer may be obtained by a conventional polymerization method, for example, a ring-opening metathesis polymerization using a metathesis polymerization catalyst, an addition polymerization using a Ziegler catalyst, and an addition polymerization using ametallocenecatalyst (usually, aring-openingmetathesis polymerization using a metathesis polymerization catalyst).

The chain olefin-cyclic olefin copolymer is amorphous (or noncrystalline) and has a degree of crystallinity of about 0 to 3%, preferably about 0 to 1%, and more preferably about 0 to 0.5% (particularly, about 0 to 0.1%). According to the present invention, the copolymer has an excellent transparency (light guide property) due to noncrystallinity thereof, and the development of haze can be prevented in a crosslinked product of the copolymer. In particular, a crosslinked product containing the cyclic olefin (particularly, the norbornene compound) and the chain olefin in a predetermined ratio is amorphous, having a degree of crystallinity of substantial 0% (e. g. , not more than 0.5%, preferably not more than 0.1%, and more preferably 0%), and there is almost no recognizable internal haze. Thus, the crosslinked product has an excellent transparency. In this manner, the crosslinked product of the present invention is amorphous, having a degree of crystallinity of substantial 0%. When the degree of crystallinity is measured according to the following method, a slight crystalline phase is sometimes observed depending on how to set a baseline.

The degree of crystallinity can be calculated, based on X-ray diffraction, by fitting a crystalline phase (peak) and an amorphous phase (halo) and substituting each integrated intensity into the following equation. In the equation, X represents a scattering integrated intensity of crystal (a scattering integrated intensity derived from a crystalline phase) and Y represents a scattering integrated intensity of amorphous (a scattering integrated intensity derived from an amorphous phase).

$$\text{Degree of crystallinity (\%)} = [X/(X+Y)] \times 100$$

The glass transition temperature (Tg) of the chain olefin-cyclic olefin copolymer (before crosslinking) can be selected from the range of about 10 to 100°C. In terms of impartment of a reasonable flexibility, the glass transition temperature is preferably about 20 to 80°C (e.g., about 25 to 55°C) and more preferably about 25 to 75°C (particularly, about 30 to 45°C). Further, in combining the cyclic olefin (particularly, a norbornene compound) and the chain olefin in the ratio mentioned above from the viewpoint of a high compatibility of flexibility (particularly, low-temperature softening) and heat resistance, the glass transition temperature is, for example, about 15 to 50°C (e.g., about 30 to 50°C), preferably about 20 to 40°C (e.g., about 30 to 40°C), and more preferably about 25 to 35°C (particularly, about 30 to 35°C). Furthermore, in terms of transparency, the glass transition temperature may be over 30°C, and may be, for example, about 31 to 50°C, preferably about 32 to 45°C, and more preferably about 33 to 40°C.

The chain olefin-cyclic olefin copolymer has a number average molecular weight of, for example, about 1000 to 150000, preferably about 5000 to 120000, and more preferably about 10000 to 100000 (particularly, about 20000 to 90000).

The glass transition temperature and the melting point can be controlled by adjusting the ratio of the monomer, the substituent of the monomer, the molecular weight of the polymer, and others.

(Second olefinic polymer)

In addition to the cyclic olefinic polymer, a second olefinic polymer crosslinkable to the cyclic olefinic polymer may be contained in the crosslinked product. According to the present invention, the second olefinic polymer can be used for adjusting the crosslinking density of the crosslinked product to control the flexibility or heat resistance thereof. The second olefinic polymer is not particularly limited to a specific one as far as the second olefinic polymer is crosslinkable to the cyclic olefinic polymer. The second olefinic polymer may include a chain olefinic polymer, a cyclic olefinic polymer (a second cyclic olefinic polymer) other than the cyclic olefinic polymer, and others.

The chain olefinic polymer may include a polymer containing a chain olefin as exemplified in the section "Cyclic olefinic polymer", in particular, an α-chain $C_{2-4}$ olefin such as ethylene or propylene (particularly, ethylene). As the chain olefinic polymer, for example, there may be mentioned a polyethylene-series polymer, a polypropylene-series polymer, and a poly(methylpentene-1) polymer. These chain olefinic polymers may be used alone or in combination. Among these chain olefinic polymers, a polyethylene-series polymer, such as a low-, middle- or high-density polyethylene or a straight-chain low-density polyethylene, is preferred.

The second cyclic olefinic polymer may be a cyclic olefinic polymer in which the proportion of the cyclic olefin in the total amount of the chain olefin and the cyclic olefin of the above-mentioned cyclic olefinic polymer is over 40% by mol. The ratio (molar ratio) of the chain olefin relative to the cyclic olefin is, for example, about 50/50 to 0/100 and preferably about 40/60 to 10/90 in a ratio of the chain olefin/the cyclic olefin. The second cyclic olefinic polymers may be used alone or in combination. Among these second cyclic olefinic polymers, for example, a norbornene-ethylene copolymer containing norbornene and ethylene in the ratio mentioned above is preferred.

The glass transition temperature of the second olefinic polymer can be selected from the range of about -150°C to 200°C depending on the species thereof. In order to adjust the glass transition temperature of the cyclic olefinic polymer as an essential polymer, there may be used a second cyclic olefinic polymer having a glass transition temperature higher than that of the essential cyclic olefinic polymer (for example, having a glass transition temperature of over 100°C, about 120 to 200°C) or a polyethylene-series polymer having a glass transition temperature lower than that of the essential cyclic olefinic polymer (for example, having a glass transition temperature of below 10°C, e.g., about -110 to 0°C, preferably about -80 to -5°C, and more preferably about -50 to -10°C).

The second olefinic polymer has a number average molecular weight of, for example, about 5000 to 300000, preferably about 10000 to 200000, and more preferably about 15000 to 150000.

The ratio (weight ratio) of the cyclic olefinic polymer relative to the second olefinic polymer may be about 100/0 to 50/50, preferably about 99/1 to 60/40, and more preferably about 95/5 to 70/30 in a ratio of the cyclic olefinic polymer/the second olefinic polymer. In terms of transparency, the proportion of the second olefinic polymer in the total amount of the cyclic olefinic polymer and the second olefinic polymer may be not more than 20% by weight. For example, the ratio of the cyclic olefinic polymer relative to the second olefinic polymer may be about 100/0 to 80/20 (particularly, about 100/0 to 90/10).

(Crosslinked product)

The crosslinked product of the present invention is obtained by crosslinking the cyclic olefinic polymer and has a reasonable flexibility and a high heat resistance. Generally, a soft polymer has a low glass transition temperature and is flexible, while the soft polymer has an insufficient heat resistance. Specifically, the polymer has a trade-off relationship between flexibility (particularly, low-temperature softening) and heat resistance; the compatibility of both characteristics has been quite difficult. In contrast, the present invention is characterized in that a specific cyclic olefinic polymer containing the cyclic olefin in an appropriately adjusted proportion is crosslinked using electron beam irradiation or others to combine a reasonable flexibility and heat resistance.

The glass transition temperature of the crosslinked product can be selected from the range of about 10 to 100°C, and is, for example, about 15 to 90°C, preferably about 20 to 80°C, and more preferably about 25 to 75°C (particularly, about 25 to 50°C). In this manner, according to the present invention, the glass transition temperature of the cyclic olefinic polymer after crosslinking rises only slightly. The difference in glass transition temperature between the cyclic olefinic polymer before crosslinking and that after crosslinking may be not more than 50°C, for example, about 0 to 40°C, preferably about 0 to 30°C, and more preferably about 0 to 20°C (particularly, about 0 to 10°C) ; the cyclic olefinic polymer maintains a high flexibility in spite of crosslinking. In particular, according to the present invention, combination of the cyclic olefin (particularly, a norbornene compound) and the chain olefin in the above-mentioned ratio adjusts a glass transition temperature of the crosslinked product so that the low-temperature softening can be expressed. The glass transition temperature may be, for example, about 25 to 55°C, preferably about 30 to 50°C, and more preferably about 30 to 45°C (particularly, about 30 to 40°C).

Further, in a tensile test (a film having a thickness of 100 μm) in accordance with JIS K7127, the crosslinked product may have a breaking elongation of about not less than 10%, for example, about 50 to 1000%, preferably about 80 to 500% (e.g., about 100 to 500%), and more preferably about 100 to 400% (particularly, about 250 to 350%). Furthermore, since the crosslinked product of the present invention shows elastic deformation, it is preferable that the crosslinked product do not have a yield point in the tensile test.

According to the present invention, the heat resistance of the crosslinked product can be shown by a coefficient of linear expansion from 140 to 150°C. Specifically, the crosslinked product may have a coefficient of linear expansion from 140 to 150°C of not more than 2000 ppm/°C (e.g., about 1 to 2000 ppm/°C) and, for example, has the coefficient of linear expansion of about 5 to 1000 ppm/°C, preferably about 10 to 800 ppm/°C, and more preferably about 50 to 500 ppm/°C (particularly, about 100 to 400 ppm/°C). According to the present invention, the crosslinked product shows an appropriate coefficient of linear expansion without melting even at a high temperature from 140 to 150°C and maintains an excellent heat resistance.

In order to combine heat resistance and flexibility (in particular, low-temperature softening), the crosslinked product of the present invention has an appropriate degree of crosslinking. The degree of crosslinking in the crosslinked product can be shown as a gel fraction measured by reflux with toluene for 3 hours. The crosslinked product may have a gel fraction of, for example, not less than 5% by weight, and may be, e.g., about 10 to 99% by weight (e.g., about 30 to 98% by weight), preferably about 50 to 97% by weight, and more preferably about 80 to 95% by weight (particularly, about 85 to 93% by weight). Specifically, the gel fraction can be measured by a measuring method described in Examples. According to the present invention, the crosslinking density can be controlled by an irradiation condition of an electron beam or a radioactive ray, and other conditions. The gel fraction can also be adjusted to not less than 70% by weight and preferably not less than 80% by weight (particularly, not less than 85% by weight) by varying the cyclic olefin within a specific range (in particular, by varying the ratio of the cyclic olefin relative to the chain olefin within the above-mentioned ratio). Accordingly, the crosslinked product has a high crosslinking density and an improved heat resistance or durability, while the crosslinked product maintains a reasonable flexibility probably due to an appropriate adjusted ratio of the cyclic olefin.

The crosslinked product of the present invention (in particular, the crosslinked product of the copolymer comprising the cyclic olefin and the chain olefin in the above-mentioned ratio) has storagemodulus at a temperature of 25°C of about 100 to 4000 MPa, preferably about 500 to 3000 MPa (e.g., about 750 to 2500 MPa), and more preferably about 1000 to 2000 MPa (e.g., about 1200 to 1800 MPa). Moreover, the crosslinked product has a storage modulus at a temperature of 50°C of about 5 to 500 MPa, preferably about 10 to 300 MPa (e.g., about 20 to 280 MPa), and more preferably about 30 to 250 MPa (e.g., about 50 to 220 MPa). Further, the crosslinked product has a storage modulus at a temperature of 80°C of about 0.01 to 10 MPa, preferably about 0.1 to 8 MPa (e.g., about 0.5 to 7.5 MPa), and more preferably about 1 to 7 MPa (e. g. , about 2 to 7 MPa). The polymer having such characteristics has a large mechanical strength around a room temperature (about 20 to 25°C) and has a high fluidity at about 30 to 80°C. Assuming that the storage modulus at 80°C is "1", the storage modulus at 25°C relative to the storage modulus at 80°C is, for example, about $0.05 \times 10^3$ to $10 \times 10^3$ (e.g., about $0.1 \times 10^3$ to $5 \times 10^3$, preferably about $0.2 \times 10^3$ to $1 \times 10^3$, and more preferably about $0.3 \times 10^3$ to $0.7 \times 10^3$). The storage modulus of the crosslinked product can be measured by the method described in Examples.

Moreover, the crosslinked product of the present invention (particularly, the crosslinked product of the copolymer comprising the cyclic olefin and the chain olefin in the above-mentioned ratio) is large in molecular weight between crosslinking points; the molecular weight between crosslinking points is, e.g., about 8000 to 30000, preferably about 9000 to 25000 (e.g., about 9500 to 20000), and more preferably about 10000 to 18000 (e. g. , about 10000 to 16000). Such a large molecular weight between crosslinking points indicates that the crosslinked product has a loosely crosslinked structure with a low crosslinking density. Thus, when the crosslinked product is heated, the crosslinked product behaves like a thermoplastic polymer and flows. Still, when the temperature of the crosslinked product reaches a temperature not lower than a predetermined temperature, the crosslinked product has heat resistance, differently from a thermoplastic polymer, due to flowing and deformation restricted by the crosslinking thereof. Thus, too small molecular weight between crosslinking points decreases fluidity, while too large molecular weight between crosslinking points lowers heat resistance to flowing deformation. The molecular weight between crosslinking points of the crosslinked product can be determined by a common method, for example, a representative method using rubber elasticity theory. According to this method, the molecular weight between crosslinking points can be calculated from the following equation:

$$G = (\rho RT)/M_X$$

wherein G represents a shear modulus (unit: Pa), $\rho$ represents a density (g/m$^3$), R represents a gas constant (8.314 J/K/mol), T represents an absolute temperature (K), $M_X$ represents a molecular weight between crosslinking points (g/mol).

The shear modulus G can be measured based on a storage modulus in a rubber-like plateau (e.g., 140°C, angular frequency: 0.1Hz) (The method for measuring storage modulus is the same as described above). Moreover, the density $\rho$ can be measured by Archimedean method, for which polymer densities as described in the book "Polymer Engineering and Science, MID-JULY, 1990, Vol.30, No13, P753-761" may be referred.

The crosslinked product of the present invention has an excellent transparency and may have a haze of, for example, not more than 5% in a method in accordance with JIS K7105. The haze is preferably not more than 2% (e.g., about 0 to 2%) and more preferably about 0.1 to 1.5% (particularly, about 0.2 to 1%). According to the present invention, an appropriately adjusted proportion of the cyclic olefin in the cyclic olefinic polymer achieves both a reasonable flexibility and a high heat resistance as described above, and also achieves a high transparency or light guide property and inhibition of haze generation probably due to noncrystallinity of the cyclic olefinic polymer.

According to the present invention, the haze can be measured using a test sample with a thickness of about 100 $\mu$m. The haze includes an external haze attributable to irregularity or other factors of a surface of a test sample (a film) and an internal haze attributable to a microcrystal present in the film. For the present invention, the sample has little or no internal haze and sometimes has a haze of about not more than 2% depending on an external haze of the surface of the film. Due to little or no internal haze, the sample does not have a large haze even if the sample has a large thickness.

The crosslinked product of the present invention may have a total light transmittance in a method in accordance with JIS K7105 (thickness: 100 $\mu$m) of, for example, not less than 80%, preferably about 80 to 99%, and more preferably about 85 to 98% (particularly, about 90 to 95%).

Further, the crosslinked product may have a ratio (454nm/605nm) of a light intensity at 454 nm relative to a light intensity at 605 nm of not less than 3.0, and is, for example, about 3.0 to 3.7, preferably about 3.1 to 3.7, and more preferably about 3.2 to 3.7.

The form of the crosslinked product of the present invention is not particularly limited to a specific one. For a film form, the film may have a thickness of about 20 to 400 $\mu$m, preferably about 30 to 350 $\mu$m, and more preferably about 40 to 300 $\mu$m (e.g., about 50 to 200 $\mu$m) and may have not less than 100 $\mu$m (e.g., about 100 to 400 $\mu$m) and preferably not less than 150 $\mu$m (e.g., about 200 to 350 $\mu$m).

The crosslinked product of the present invention may contain a conventional additive, for example, a crosslinking agent, a crosslinking accelerator, a crosslinking auxiliary, a stabilizer (e.g., an antioxidant, a heat stabilizer, a light stabilizer, and an ultraviolet ray absorbing agent), a plasticizer, an antistatic agent, and a flame retardant. These additives may be used alone or in combination.

The crosslinked product of the present invention may be substantially free from a polymer having a crosslinking group (e.g., a group having an ethylenic unsaturated bond). Further, due to crosslinking using an electron beam, the crosslinked product of the present invention may be substantially free from a crosslinking agent, a crosslinking accelerator, and a crosslinking auxiliary.

(Process for producing crosslinked product)

The crosslinked product of the present invention is obtainable by crosslinking the cyclic olefinic polymer. The manner of the crosslinking is not particularly limited to a specific one, and may be irradiation with an actinic ray (e. g. , an ultraviolet ray) or a radioactive ray (e. g. , a beta ($\beta$) ray, a gamma ($\gamma$) ray and an X-ray, particularly, a gamma ray). In terms of simple control and simple preparation of a novel crosslinked product having characteristics as mentioned above, the crosslinked product may be produced by irradiating the cyclic olefinic polymer with a high energy ray (an electron beam or a gamma ray) to crosslink the cyclic olefinic polymer. In particular, irradiation with an electron beam for crosslinking can prevent yellowing or the like probably due to inhibition of oxidation caused by heating, which allows production of a crosslinked product having an excellent transparency. According to the present invention, use of an electron beam having a high energy makes a crosslinking agent or a crosslinking accelerator (an auxiliary agent) unnecessary and allows a crosslinked product having a high stability to be produced efficiently. In particular, for the electron beam irradiation, the cyclic olefinic polymer can be crosslinked at an ordinary temperature (e.g., a temperature of about 10 to 30°C) without heating to give a crosslinked product having an improved crosslinking density.

For example, an exposure source (such as an electron beam irradiation apparatus) can be used for the electron beam irradiation. The radiation dose (dose) depends on the thickness of the cyclic olefinic polymer, and can be, for example, selected from the range of about 10 to 500 kGy (e.g., about 100 to 400 kGy). In order to increase the crosslinking density and improve the heat resistance, the radiation dose may be not less than 200 kGy, e.g., about 200 to 500 kGy, preferably about 220 to 450 kGy, and more preferably about 230 to 430 kGy (particularly, about 250 to 400 kGy).

The acceleration voltage can be selected from the range of about 10 to 1000 kV (e.g., about 100 to 500 kV). In order to improve the heat resistance, the acceleration voltage may be not less than 150 kV, e.g., about 160 to 400 kV, preferably about 170 to 300 kV, and more preferably about 180 to 250 kV.

For example, an exposure source (such as a gamma ray irradiation apparatus) can be used for the gamma ray irradiation. The radiation dose (dose) depends on the thickness of the cyclic olefinic polymer, and can be, for example, selected from the range of about 10 to 500 kGy (e.g., about 100 to 400 kGy). In order to increase the crosslinking density and improve the heat resistance, the radiation dose may be not less than 200 kGy, e.g., about 200 to 500 kGy, preferably about 220 to 450 kGy, and more preferably about 230 to 430 kGy (particularly, about 250 to 400 kGy).

The electron beam or radioactive ray irradiation may be carried out in the air, or if necessary, may be carried out in an atmosphere of an inert gas (for example, nitrogen gas, argon gas, and helium gas). According to the present invention, even after the electron beam or gamma ray irradiation, the deformation of the cyclic olefinic polymer is inhibited.

The crosslinked product of the present invention can be obtained by molding the cyclic olefinic polymer into a shape as usage (e.g., a film or a sheet and a variety of three-dimensional shapes) by a conventional molding method [for example, injection molding, extrusion molding, blow molding, vacuum molding, profile extrusion, injection pressing, press molding, gas injection molding, compression molding, and transfer molding] and then crosslinking the molded polymer to give a molded product having a desired shape.

EXAMPLES

The following examples are intended to describe this invention in further detail and should by no means be interpreted as defining the scope of the invention. Characteristics of cyclic olefinic polymers or test pieces obtained in Examples were measured by the following methods.

(Glass transition temperature and melting point)

The glass transition temperature and the melting point were measured by a differential scanning calorimeter ("DSC6200" manufactured by Seiko Instruments & Electronics Ltd.) under a nitrogen flow at a heating rate of 10°C/minute.

(Gel fraction)

Five hundred (500) mg of a test piece was weighed out, and put in a 100-ml recovery flask (short-neck flask) equipped with a cooling pipe. Into the flask, 50 ml of toluene was added and stirred at a reflux temperature for 3 hours. Thereafter, the mixture was filtered. The residue was dried under a reduced pressure and then weighed to determine a gel fraction.

(Degree of crystallinity)

The wide-angle X-ray diffraction of the resulting film was measured using an X-ray diffractometer (XRD, "RINT1500" manufactured by Rigaku Corporation). Specifically, the diffraction peaks were measured using CuK$\alpha$ in a 2$\theta$ range of 0° to 60°.

(Haze)

For each one of test pieces obtained in Examples, the haze was measured using a haze meter (NDH-500 manufactured by Nippon Denshoku Industries Co., Ltd.) in accordance with JIS K 7136.

(Tensile test)

For each one of test pieces obtained in Examples, a JIS No. 2 dumbbell piece (width: 6 mm) was punched out in a machine direction (MD) and subjected to a tensile test at 23°C/50%RH and a tension rate of 500 mm/minute.

(Light intensity ratio, hue of emitted light)

Each one of test pieces obtained in Examples was cut into a rectangular slice having a thickness of 200 $\mu$m, a width of 2 cm, and a length of 8 cm to give a strip film. A white light entered a first cut-out end of the strip film using a white LED (trade name "NSPB500S" manufactured by Nichia Corporation), passed through the film (light path length: 8 cm), and emitted from a second cut-out end of the strip film. A visible light spectrum of the emitted light was measured using a spectrophotometer (a multichannel spectroscope PMA-11 manufactured by Hamamatsu Photonics, K.K.). Moreover, the hue of the emitted light was visually observed. The white LED used in this measurement had a peak derived from a blue LED at 454 nm and a broad spectrum due to a fluorescent material at 500 nm or longer wavelength. The ratio of a light intensity at 454 nm relative to that at 605 nm (a complementary color of blue) in the white LED itself was 3.7. A white LED having the light intensity ratio closer to 3.7 has better reproducibility of spectra, or more excellent light guide performance.

```
Light intensity ratio =

light intensity at 454 nm/light intensity at 605 nm
```

(Coefficient of linear expansion)

For each one of test pieces obtained in Examples, the coefficient of linear expansion was measured from 140°C to 150°C in accordance with JIS K7197 using a thermomechanical analyzer (EXSTAR TMA/SS7100 manufactured by SII NanoTechnology Inc.).

(Measurement of viscoelasticity)

Each one of test pieces of Examples and Comparative Examples was cut to a width of 5 mm and a length of 50 mm to give a specimen. A storage modulus (E') of the specimen was measured using a dynamic viscoelasticity measuring apparatus (RSA-III manufactured by TA Instruments Japan Inc.) under the following conditions: a chuck distance of 20 mm, a heating rate of 5°C/minute, and an angular frequency of 10 Hz.

(Molecular weight between crosslinking points)

Data obtained at a temperature of 140°C and an angular frequency of 0.1 Hz in the measurement of viscoelasticity were substituted for the calculation equation of the molecular weight between crosslinking points (G = $(\rho RT)/M_X$) to calculate a molecular weight between crosslinking points. The density $\rho$ $(g/m^3)$ was taken as 1.02.

Production Example 1 (cyclic olefinic polymer A)

Under a nitrogen atmosphere, 15 liters of toluene, 15 mmol of triisobutyl aluminum (TIBA), 0.75 mmol of zirconium tetrachloride, and 0.75 mmol of anilinium tetrakis(pentafluorophenyl)borate were thrown into a 30-liter autoclave in this order at a room temperature. Subsequently, 1.8 liters of a toluene solution containing 70% by weight of norbornene were added thereto. After the temperature of the mixture was raised to 50°C, the reaction was carried out for 60 minutes while continuously introducing ethylene into the autoclave so as to maintain an ethylene partial pressure of 5 kgf/cm$^2$. After the completion of the reaction, the resulting polymer solution was thrown into 15 liters of methanol to precipitate a polymer. The polymer was separated by filtration and dried to give a cyclic olefinic polymer A (ethylene-norbornene copolymer A). The yield was 3.12 kg, and the polymerization activity was 46 kg/gZr (a yield per gram of zirconium).

In $^{13}$C-NMR, a ratio of a sum of a peak derived from an ethylene unit and peaks derived from methylene groups located on 5- and 6-positions in a norbornene unit (around 30 ppm) relative to a peak derived from a methylene group located on 7-position in a norbornene unit (around 32.5 ppm) was calculated, and thus the norbornene content of the polymer was determined to be 8.6% by mol. In the polymer, the glass transition temperature was -1°C, the melting point was 80°C, and the degree of crystallinity was 10%.

Comparative Example 1

A film test piece having a thickness of 100 $\mu$m was prepared from the cyclic olefinic polymer A obtained in Production Example 1 using a small extruder (manufactured by Research Laboratory of Plastics Technology Co., Ltd., 20 mm$\phi$, L/D = 25) equipped with a T-die having a width of 150 mm at an extrusion temperature of 200°C, a chill roll temperature of 10°C and an adjusted drawing rate. The resulting test piece was irradiated with an electron beam at an acceleration voltage of 200 kV and a dose of 350 kGy using an EB irradiation apparatus ("TYPE; CB250/15/180L" manufactured by Iwasaki Electric Co., Ltd.) in a nitrogen atmosphere at an ordinary temperature to crosslink the polymer. When a light entered the test piece using a white LED, a light emitted from the test piece was colored orange, which was caused by Rayleigh scattering due to a crystalline polymer constituting the test piece.

Example 1

A film test piece was prepared in the same manner as in Comparative Example 1 except that a cyclic olefinic polymer (trade name "TOPAS9903" manufactured by Topas Advanced Polymers GmbH, a number average molecular weight of 69000, a glass transition temperature of 33°C, a norbornene content of 20% by mol, a degree of crystallinity of 0%) was used instead of the cyclic olefinic polymer A and that the electron beam irradiation was conducted at an acceleration voltage of 200 kV and a dose of 250 kGy. A light emitted from the test piece was white due to an amorphous polymer constituting the test piece. Further, the storage modulus at a temperature of 25°C was 1480 MPa, the storage modulus at a temperature of 80°C was 2.99 MPa, and the molecular weight between crosslinking points was 13000.

Example 2

A film test piece was prepared in the same manner as in Example 1 except that the electron beam irradiation was conducted at an acceleration voltage of 200 kV and a dose of 350 kGy. A light emitted from the test piece was white due to an amorphous polymer constituting the test piece. Further, the storage modulus at a temperature of 25°C was 1520 MPa, the storage modulus at a temperature of 80°C was 3.04 MPa, and the molecular weight between crosslinking points was 11000.

Example 3

A film test piece was prepared in the same manner as in Example 1 except that the electron beam irradiation was conducted at an acceleration voltage of 200 kV and a dose of 150 kGy. A light emitted from the test piece was white due to an amorphous polymer constituting the test piece. Further, the storage modulus at a temperature of 25°C was 1510 MPa, the storage modulus at a temperature of 80°C was 2.98 MPa, and the molecular weight between crosslinking points was 15000.

Example 4

A film test piece was prepared in the same manner as in Comparative Example 1 except that a cyclic olefinic polymer (trade name "TOPAS9506" manufactured by Topas Advanced Polymers GmbH, a number average molecular weight of 66000, a glass transition temperature of 70°C, a norbornene content of 32% by mol, a degree of crystallinity of 0%) was used instead of the cyclic olefinic polymer A. A light emitted from the test piece was white due to an amorphous polymer constituting the test piece.

Example 5

A film test piece was prepared in the same manner as in Example 1 except that an irradiation was conducted at a dose of 350 kGy using a gamma ray irradiation apparatus ("JS10000HD" manufactured by Nordion, radiation source: cobalt-60) under the atmosphere, an ordinary temperature (inside temperature: 40°C) instead of the electron beam irradiation. A light emitted from the test piece was white due to an amorphous polymer constituting the test piece. Further, the storage modulus at a temperature of 25°C was 1500 MPa, the storage modulus at a temperature of 80°C was 3.06 MPa, and the molecular weight between crosslinking points was 11000.

Comparative Example 2

A film test piece was prepared in the same manner as in Comparative Example 1 except that a cyclic olefinic polymer (trade name "TOPAS8007" manufactured by Topas Advanced Polymers GmbH, a number average molecular weight of 51000, a glass transition temperature of 80°C, a norbornene content of 42% by mol, a degree of crystallinity of 0%) was used instead of the cyclic olefinic polymer A. A light emitted from the test piece was white due to an amorphous polymer constituting the test piece.

Comparative Example 3

A film test piece was prepared in the same manner as in Comparative Example 1 except that a cyclic olefinic polymer (trade name "TOPAS6013" manufactured by Topas Advanced Polymers GmbH, a glass transition temperature of 130°C, a norbornene content of 50% by mol, a degree of crystallinity of 0%) was used instead of the cyclic olefinic polymer A and that the electron beam irradiation was conducted at an acceleration voltage of 200 kV and a dose of 250 kGy. A light emitted from the test piece was white due to an amorphous polymer constituting the test piece.

Table 1 shows monomer composition ratios and electron beam irradiation conditions in Comparative Examples and Examples. Table 2 and Table 3 show characteristic evaluation of test pieces obtained in Comparative Examples and Examples.

[Table 1]

Table 1

| | Monomer composition ratio | | Irradiation condition | |
|---|---|---|---|---|
| | Norbornene | Ethylene | Acceleration voltage (kV) | Dose (kGy) |
| Comparative Example 1 | 8.6 | 91.4 | 200 | 350 |
| Example 1 | 20 | 80 | 200 | 250 |
| Example 2 | 20 | 80 | 200 | 350 |

(continued)

| | Monomer composition ratio | | Irradiation condition | |
| --- | --- | --- | --- | --- |
| | Norbornene | Ethylene | Acceleration voltage (kV) | Dose (kGy) |
| Example 3 | 20 | 80 | 200 | 150 |
| Example 4 | 32 | 68 | 200 | 350 |
| Comparative Example 2 | 42 | 58 | 200 | 350 |
| Comparative Example 3 | 50 | 50 | 200 | 250 |

[Table 2]

Table 2 (Optical characteristics)

| | Before irradiation | | | | After irradiation | | | |
| --- | --- | --- | --- | --- | --- | --- | --- | --- |
| | Haze (%) | Total light transmittance (%) | Light intensity ratio | Hue of emitted light | Haze (%) | Total light transmittance (%) | Light intensity ratio | Hue of emitted light |
| Comparative Example 1 | 2.5 | 91.5 | 0.3 | Orange | 2.4 | 91.7 | 0.3 | Orange |
| Example 1 | 0.9 | 91.5 | 3.4 | White | 0.9 | 91.6 | 3.4 | White |
| Example 2 | 0.6 | 91.5 | 3.4 | White | 0.9 | 91.6 | 3.4 | White |
| Example 3 | 0.6 | 91.5 | 3.4 | White | 0.7 | 91.6 | 3.4 | White |
| Example 4 | 0.6 | 91.8 | 3.5 | White | 0.7 | 91.6 | 3.5 | White |
| Example 5 | 0.6 | 91.5 | 3.4 | White | 0.7 | 91.6 | 3.4 | White |
| Comparative Example 2 | 0.7 | 91.5 | 3.4 | White | 0.6 | 91.4 | 3.4 | White |
| Comparative Example 3 | 0.4 | 91.4 | 3.5 | White | 0.4 | 91.5 | 3.5 | White |

[Table 3]

Table 3 (Mechanical characteristics)

| | Before irradiation | | | | | After irradiation | | | | |
|---|---|---|---|---|---|---|---|---|---|---|
| | Elastic modulus (MPa) | Breaking elongation (%) | Maximum stress (MPa) | Gel fraction (%) | Coefficient of linear expansion (ppm/°C) | Elastic modulus (MPa) | Breaking elongation (%) | Maximum stress (MPa) | Gel fraction (%) | Coefficient of linear expansion (ppm/°C) |
| Comparative Example 1 | 55 | 570 | 54 | 0 | Melting | 52 | 574 | 64 | 87.6 | 320 |
| Example 1 | 1500 | 195 | 44 | 0 | Melting | 1480 | 270 | 59 | 85.2 | 350 |
| Example 2 | 1500 | 195 | 44 | 0 | Melting | 1520 | 280 | 62 | 91.1 | 240 |
| Example 3 | 1500 | 195 | 44 | 0 | Melting | 1510 | 280 | 61 | 70.8 | 580 |
| Example 4 | 1750 | 52 | 51 | 0 | Melting | 1720 | 55 | 56 | 80.2 | 360 |
| Example 5 | 1500 | 195 | 44 | 0 | Melting | 1500 | 280 | 60 | 91.5 | 260 |
| Comparative Example 2 | 2150 | 4.1 | 52 | 0 | Melting | 2100 | 4 | 50 | 0 | Melting |
| Comparative Example 3 | 2400 | 2.6 | 51 | 0 | Melting | 2410 | 2.5 | 53 | 0 | Melting |

As apparent from the results described in Table 2 and Table 3, the crosslinked products in accordance with the present invention have high transparency and excellent mechanical characteristics.

INDUSTRIAL APPLICABILITY

The crosslinked product of the present invention is usable for a molding material in a variety of fields, for example, an optical material, an electrical or electronic material, an electrical insulating material, an automotive component material, a medical material, and a building or civil engineering material. Further, the crosslinked product of the present invention, which combines heat resistance and flexibility and has an excellent transparency, is usable for a switch member for various electrical or electronic apparatus or optical apparatus, for example, a portable device, a household electric appliance, and a controller. Specifically, the crosslinked product is also useful for a member for a mobile phone, an amusement apparatus, a mobile device, a touch panel, a car navigation system, a clock or a watch, a desk-top calculator, a television, and a personal computer [for example, a key top sheet, a key mat sheet, a light guide sheet, a reflection sheet, and an OCA tape (a high-transparent adhesive transfer tape or an optical coreless tape)].

In particular, the crosslinked product of the present invention is a material having novel characteristics of all of high transparency, low-temperature softening and heat resistance and is particularly suitable for an optical sealant (for example, an OCA tape and an organic electroluminescent (EL) sealant).

**Claims**

1. A crosslinked product of a chain olefin-cyclic olefin copolymer comprising a chain olefin and a cyclic olefin as polymerizable components, wherein
   the cyclic olefin contains a bicyclic olefin,
   the proportion of the cyclic olefin in the total amount of the chain olefin and the cyclic olefin is more than 15% by mol and not more than 40% by mol, and
   the chain olefin-cyclic olefin copolymer has a glass transition temperature of 20 to 80°C.

2. A crosslinked product of a chain olefin-cyclic olefin copolymer comprising a chain olefin and a cyclic olefin as polymerizable components, wherein
   the cyclic olefin contains a bicyclic olefin,
   the proportion of the cyclic olefin in the total amount of the chain olefin and the cyclic olefin is more than 15% by mol and not more than 40% by mol, and
   the chain olefin-cyclic olefin copolymer has a degree of crystallinity of not more than 1%.

3. A crosslinked product according to claim 1 or 2, wherein the chain olefin-cyclic olefin copolymer has a degree of crystallinity of not more than 0.5%.

4. A crosslinked product according to any one of claims 1 to 3, which has a haze of not more than 2% in accordance with JIS K7136.

5. A crosslinked product according to any one of claims 1 to 4, wherein the chain olefin-cyclic olefin copolymer has a glass transition temperature of 30 to 50°C.

6. A crosslinked product according to any one of claims 1 to 5, wherein the cyclic olefin comprises a norbornene compound, and the molar ratio of the chain olefin relative to the cyclic olefin is 84/16 to 75/25 in a ratio of the chain olefin/the cyclic olefin.

7. A crosslinked product according to any one of claims 1 to 6, which has a breaking elongation of 100 to 400% in a thickness of 100 $\mu$m in accordance with JIS K7127, and a gel fraction of not less than 70% by weight measured by reflux with toluene for 3 hours.

8. A crosslinked product according to any one of claims 1 to 7, which has a storage modulus of 100 to 4000 MPa at a temperature of 25°C, a storage modulus of 0.01 to 10 MPa at a temperature of 80°C, and a molecular weight between crosslinking points of 8000 to 30000.

9. A crosslinked product according to any one of claims 1 to 8, which is substantially free from both a polymer having a crosslinking group and a crosslinking agent.

10. A crosslinked product according to any one of claims 1 to 9, which is an electron-beam-crosslinked product.

11. A crosslinked product according to any one of claims 1 to 10, which is a sealant, in the form of a sheet, for an optical device.

12. A process for producing a crosslinked product recited in claim 1, which comprises irradiating a chain olefin-cyclic olefin copolymer with an electron beam or a radioactive ray for crosslinking the copolymer.

13. A process according to claim 12, wherein the copolymer is irradiated with an electron beam without heating for crosslinking the copolymer.

14. A process according to claim 12 or 13, wherein the copolymer is irradiated with an electron beam at an acceleration voltage of not less than 150 kV and an exposure dose of not less than 200 kGy for crosslinking the copolymer.

**Amended claims under Art. 19.1 PCT**

1. (amended) A crosslinked product of a chain olefin-cyclic olefin copolymer comprising a chain olefin and a cyclic olefin as polymerizable components, wherein
the cyclic olefin contains a bicyclic olefin,
the ratio of the chain olefin relative to the cyclic olefin is 84/16 to 65/35 in a molar ratio of the chain olefin/the cyclic olefin, and
the chain olefin-cyclic olefin copolymer has a glass transition temperature of 30 to 50°C.

2. (amended) A crosslinked product according to claim 1, wherein the chain olefin-cyclic olefin copolymer has a degree of crystallinity of not more than 1%.

3. A crosslinked product according to claim 1 or 2, wherein the chain olefin-cyclic olefin copolymer has a degree of crystallinity of not more than 0.5%.

4. A crosslinked product according to any one of claims 1 to 3, which has a haze of not more than 2% in accordance with JIS K7136.

5. (amended) A crosslinked product according to any one of claims 1 to 4, wherein the cyclic olefin comprises a norbornene compound, and the molar ratio of the chain olefin relative to the cyclic olefin is 84/16 to 75/25 in a ratio of the chain olefin/the cyclic olefin.

6. (new) A crosslinked product according to any one of claims 1 to 5, wherein the cyclic olefin comprises norbornene.

7. A crosslinked product according to any one of claims 1 to 6, which has a breaking elongation of 100 to 400% in a thickness of 100 $\mu$m in accordance with JIS K7127, and a gel fraction of not less than 70% by weight measured by reflux with toluene for 3 hours.

8. A crosslinked product according to any one of claims 1 to 7, which has a storage modulus of 100 to 4000 MPa at a temperature of 25°C, a storage modulus of 0.01 to 10 MPa at a temperature of 80°C, and a molecular weight between crosslinking points of 8000 to 30000.

9. A crosslinked product according to any one of claims 1 to 8, which is substantially free from both a polymer having a crosslinking group and a crosslinking agent.

10. A crosslinked product according to any one of claims 1 to 9, which is an electron-beam-crosslinked product.

11. (new) A film sealant having a thickness of 50 to 200 $\mu$m and comprising a crosslinked product of a chain olefin-cyclic olefin copolymer comprising a chain olefin and a cyclic olefin as polymerizable components, wherein
the cyclic olefin contains a bicyclic olefin,
the proportion of the cyclic olefin in the total amount of the chain olefin and the cyclic olefin is more than 15% by mol and not more than 40% by mol, and
the chain olefin-cyclic olefin copolymer has a glass transition temperature of 20 to 80°C.

**12.** (amended) A sealant for an optical device, which is in the form of a sheet and comprises a crosslinked product of a chain olefin-cyclic olefin copolymer comprising a chain olefin and a cyclic olefin as polymerizable components, wherein

the cyclic olefin contains a bicyclic olefin,

the proportion of the cyclic olefin in the total amount of the chain olefin and the cyclic olefin is more than 15% by mol and not more than 40% by mol, and

the chain olefin-cyclic olefin copolymer has a glass transition temperature of 20 to 80°C.

**13.** (amended) A process for producing a crosslinked product recited in claim 1, which comprises irradiating a chain olefin-cyclic olefin copolymer with an electron beam or a radioactive ray for crosslinking the copolymer.

**14.** (amended) A process according to claim 13, wherein the copolymer is irradiated with an electron beam without heating for crosslinking the copolymer.

**15.** (amended) A process according to claim 13 or 14, wherein the copolymer is irradiated with an electron beam at an acceleration voltage of not less than 150 kV and an exposure dose of not less than 200 kGy for crosslinking the copolymer.

**Statement under Art. 19.1 PCT**

In claim 1, the ratio (molar ratio) of the chain olefin relative to the cyclic olefin is specified with "84/16 to 65/35 in a molar ratio of the chain olefin/the cyclic olefin" based on paragraph [0033] of the description as filed.

In claim 1, the glass transition temperature is specified with "30 to 50°C" based on claim 5 as filed.

Claim 2 is amended to be dependent from claim 1.

Claim 6 is a new claim specifying the cyclic olefin with norbornene based on paragraph [0027] of the description as filed.

Claim 11 is a new claim relating to a film having a thickness of 50 to 200 $\mu$m based on claim 1 and paragraph [0060] of the description as filed.

Claim 12 is replaced with claim 11 as filed, with changing into independent form.

Following the above amendment, other claims are reformulated and arranged.

**INTERNATIONAL SEARCH REPORT**

| International application No. |
| --- |
| PCT/JP2012/060849 |

A. CLASSIFICATION OF SUBJECT MATTER
*C08J7/00*(2006.01)i, *C08J3/28*(2006.01)i

According to International Patent Classification (IPC) or to both national classification and IPC

B. FIELDS SEARCHED

Minimum documentation searched (classification system followed by classification symbols)
C08J7/00, C08J3/28, C08F210/00-210/18

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 62-34924 A (Mitsui Petrochemical Industries, Ltd.),<br>14 February 1987 (14.02.1987),<br>claims; page 2, upper right column, 7th line from the bottom to lower left column; page 4, upper right column, lines 11 to 16; page 5, lower right column, line 8 to page 6, upper left column, line 11; examples<br>(Family: none) | 1-10,12-14<br>11 |
| A | JP 2006-313660 A (Sumitomo Electric Fine Polymer Inc.),<br>16 November 2006 (16.11.2006),<br>claims; paragraphs [0007] to [0011], [0020], [0028]; examples<br>(Family: none) | 1-14 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 July, 2012 (12.07.12) | 24 July, 2012 (24.07.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/060849

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-345885 A  (Idemitsu Kosan Co., Ltd.), 20 December 1994 (20.12.1994), claims; paragraphs [0010] to [0011], [0013] to [0014], [0019], [0066], [0074] to [0077]; examples (Family: none) | 1-14 |
| A | JP 2002-544344 A  (DuPont Dow Elastomers L.L.C.), 24 December 2002 (24.12.2002), claims & EP 1183286 A1      & WO 2000/069930 A1 & CN 1367801 A | 1-14 |
| A | JP 2006-274165 A  (Sumitomo Chemical Co., Ltd.), 12 October 2006 (12.10.2006), paragraphs [0001], [0008] to [0009], [0015], [0017], [0023] (Family: none) | 1-14 |
| A | JP 11-340593 A  (Shin-Etsu Polymer Co., Ltd.), 10 December 1999 (10.12.1999), claims (Family: none) | 1-14 |
| A | JP 2008-308609 A  (Achilles Corp.), 25 December 2008 (25.12.2008), claims; paragraphs [0023] to [0028], [0034] to [0035]; examples (Family: none) | 1-14 |
| A | JP 2007-302871 A  (Sumitomo Electric Industries, Ltd.), 22 November 2007 (22.11.2007), claims; examples (Family: none) | 1-14 |
| E,A | WO 2012/063855 A1  (Daicel Corp.), 18 May 2012 (18.05.2012), claims; examples & JP 2012-102211 A | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005047991 A
- JP 2006274164 A
- JP 11340590 A
- JP 3274702 B
- JP 6345885 A

**Non-patent literature cited in the description**

- Polymer Engineering and Science. July 1990, vol. 30, 753-761